# EUROPEAN PATENT SPECIFICATION

(11) **EP 2 105 482 B1**
(45) Date of publication and mention of the grant of the patent: **21.02.2018**
(21) Application number: 07850667.2
(22) Date of filing: 15.12.2007
(51) Int. Cl.: C09D 201/00, B05D 7/24, C09C 1/36, C09C 3/06, C09D 5/02, C09D 7/12

(54) **PROCESS FOR PRODUCTION OF EMULSION COATING MATERIAL AND FILMS MADE FROM THE COATING MATERIAL**
VERFAHREN ZUR HERSTELLUNG EINES EMULSIONSLACKS UND FILME AUS DEM LACK
PROCÉDÉ DE PRODUCTION D'UNE MATIÈRE DE REVÊTEMENT EN ÉMULSION ET FILMS FABRIQUÉS À PARTIR DE CETTE MATIÈRE DE REVÊTEMENT

(30) Priority: 15.12.2006 JP 2006339215
(43) Date of publication of application: 30.09.2009
(73) Proprietor: National Institute of Advanced Industrial Science and Technology, Tokyo 100-8921 (JP); FUJIKURA KASEI CO., LTD., Itabashi-ku Tokyo 174-0046 (JP)
(72) Inventor: OHASHI, Fumihiko, Nagoya-shi Aichi 463-8560 (JP); SHIBAHARA, Atsushi, Saitama 340-0203 (JP)
(74) Representative: V.O.
(86) International application number: PCT/JP2007/074175
(87) International publication number: WO 2008/072748

(56) References cited:
- EP-A1- 2 103 349
- WO-A1-99/33566
- WO-A1-03/006159
- WO-A1-03/053576
- JP-A- 10 244 166
- JP-A- 2001 031 420
- JP-A- 2004 243 307
- JP-A- 2005 289 778
- JP-A- 2007 077 391
- KAGAKU DAIJITEN HENSHU IINKAI: 'Kagaku Daijiten 9 reduced-size edition', 15 August 1989, KYORITSU SHUPPAN CO., LTD page 798, XP008108977

## Description

### TECHNICAL FIELD

The present invention relates to a process for production of an emulsion coating material containing photocatalyst composite particles, an emulsion coating material obtained therefrom, and films made from the emulsion coating material. More particularly, the present invention relates to a process for production of an emulsion coating material comprising a photocatalyst composite complex obtained by precipitating calcium phosphate from an aqueous acidic solution in which titanium oxide is dispersed and phosphate ions and calcium ions are dissolved, whereby the calcium phosphate coats and adheres to the surface of titanium oxide. The present invention provides a novel emulsion coating material and films thereof which, together with the considerably enhanced productivity of photocatalyst composite particles obtained by the aforesaid process of coating calcium phosphate onto the surface of the titanium oxide, demonstrate high functionality as a result of incorporating the aforesaid photocatalyst composite particles in a coating material.

### BACKGROUND ART

Photocatalysts are activated when irradiated with light from the sun or a fluorescent lamp, and the like, and have the action of decomposing harmful substances such as organic substances and bacteria. Attempts have been made to take advantage of this property by coating a coating material containing a photocatalyst in the form of titanium oxide onto a base material, such as a wall, to allow the base material to demonstrate photocatalytic function. Since films formed by this coating material are able to decompose soiling (organic substances) adhered to a surface with a photocatalyst, while also allowing a hydrophilic photocatalyst to be exposed on the surface of the film, such films demonstrate the characteristic of being resistant to adherence of dirt. Thus, films containing a photocatalyst have a self-cleaning function enabling them to remove dirt autonomously.

However, in the case of using an organic coating material containing a resin component, the resin is decomposed by the photocatalytic action of the titanium oxide as a result of coming in contact therewith, thereby resulting in the problem of the occurrence of deterioration of the coated film. Therefore, coating materials have recently been proposed that contain photocatalyst composite particles in which calcium phosphate such as apatite is coated onto titanium oxide (see, for example, Patent Documents 1 to 3). In all of these coating materials, photocatalyst composite particles are produced by adding calcium chloride to a dispersion in which titanium oxide is dispersed in a pseudo body fluid containing sodium chloride, calcium chloride, potassium dihydrogen phosphate or disodium hydrogen phosphate dissolved therein.

In this type of photocatalyst composite particles, the apatite does not completely coat the surface of the titanium oxide but rather, is dispersed and precipitated on the titanium oxide surface. Namely, since the surface of the titanium oxide is partially exposed, there is hardly any loss of photocatalyst function. In addition, since the apatite coats the surface of the titanium oxide, the apatite serves as a spacer, and since the titanium oxide does not contact the resin component directly, decomposition of the resin component is inhibited thereby, allowing the use of an organic coating material. In addition, since apatite has a superior substance adsorption ability with respect to proteins, aldehydes and the like, the above-mentioned photocatalyst composite particles adsorb substances even in the absence of light, while also being able to decompose these substances adsorbed in the absence of light by photocatalytic action when irradiated with light.

However, since the pseudo body fluid used to produce the photocatalyst composite particles contained in the coating materials described in the examples of the prior art disclosed in the above-mentioned Patent Documents 1 to 3 contains an excess of ionic species such as sodium ions, potassium ions, calcium ions or chloride ions, when a dispersion of the photocatalyst composite particles is used directly in a coating material, the resin component may end up aggregating due to the effects of the ionic species present, thereby resulting in defective dispersion. Since the number of production steps increases as a result of having to repeatedly decant the dispersion in order to prevent aggregation of the resin component, productivity becomes poor. In addition, in techniques using the above-mentioned pseudo body fluids, the growth of apatite crystals is extremely slow, thus making the practical application of these techniques difficult due to the low level of productivity as production technologies of industrial products, while coated films formed by coating materials containing photocatalyst composite particles produced by this process have decreased homogeneity due to aggregation by the resin component. Consequently, this type of coating material is unable to satisfy requirements regarding organic substance photodecomposition function or weather resistance, thus resulting in a strong desire in this technical field for the development of a novel coating material and coated film capable of overcoming these problems.
Patent Document 1: Japanese Patent Application Laid-open No. 2000-1631
Patent Document 2: Japanese Patent Application Laid-open No. 2003-80078
Patent Document 3: Japanese Patent Application Laid-open No. 2004-58050

JP2005-289778 A discloses a method for manufacturing apatite-coated titanium oxide wherein an aqueous slurry of titanium dioxide having a low pH is prepared, as well as an aqueous solution containing, for example, phosphate salt and calcium salt which serve as the reactants for the apatite. The aqueous slurry and aqueous solution are mixed and reacted together at a pH of 5-9. WO 03/053576 A1 discloses a method for producing a composite particle comprising titanium dioxide which comprises a step of providing an aqueous slurry containing titanium dioxide and having a pH of 3-5; a step of providing an aqueous solution containing a compound having no photocatalytic activity such as, for example, salts of phosphates or condensed phosphates; and a further step of mixing and reacting both fluids at a pH of 4-10, more desirably at a pH of 5-9. When the compound having no photocatalytic activity is only sparingly soluble in water, aqueous solutions of a plurality of reactants for generating the sparingly soluble compound are prepared.

As a result of conducting extensive studies for the purpose of developing a novel coating material and films capable of solving the problems of the prior art as described above, the inventors of the present invention found that calcium phosphate can be uniformly precipitated on the surface of titanium oxide by adjusting the pH of an aqueous dispersion/solution, having a pH of 4.0 or lower in which titanium oxide is dispersed and phosphate ions and calcium ions are dissolved, to a pH of 5.0 to 11.0, thereby leading to completion of the present invention.

### DISCLOSURE OF THE INVENTION

With the foregoing in view, an object of the present invention is to provide a process for production of an emulsion coating material which enables calcium phosphate to be easily coated onto the surface of titanium oxide, is able to enhance the productivity of photocatalyst composite particles, and is able to improve the organic substance photodecomposition function and weather resistance of coating materials and films containing the photocatalyst composite particles. A further object of the present invention is to provide an emulsion coating material obtained by the aforesaid process, as well as films made from that emulsion coating material

In order to solve the above-mentioned problems, the present invention is composed of the following technical means:
(1) a process for production of an emulsion coating material containing photocatalyst composite particles and a resin component, said process comprising:
   preparing an aqueous acidic dispersion/solution having a pH of 4.0 or lower, in which titanium oxide is dispersed and phosphate ions and calcium ions are dissolved, which ions would otherwise precipitate as calcium phosphate if the pH of the dispersion/ solution was greater than 4.0;
   then adjusting the pH of the acidic dispersion/solution towards the alkaline side of the pH of the dispersion/solution to obtain photocatalyst composite particles in which said calcium phosphate is precipitated and adhered to the surface of titanium oxide; and
   mixing the resultant dispersion of photocatalyst composite particles with an aqueous organic coating material, such as a synthetic resin emulsion, to produce the emulsion coating material,
   wherein the particle size distribution of the photocatalyst composite particles as determined by the laser scattering method is controlled to be constant within the range of 80 to 600 nm, the ratio of calcium phosphate in said particles is 0.1 to 50 wt%, and the volume-based mean particle diameter of said particles is within the range of 50 to 1000 nm.
   The aforesaid precipitation of calcium phosphate is referred to herein as the "re-precipitation" of calcium phosphate;
(2) the process for production of an emulsion coating material described in (1) above, wherein the pH of the acidic dispersion/ solution is adjusted using aqueous ammonia;
(3) the process for production of an emulsion coating material described in (1) above, wherein an acidic titania sol is used as the titanium oxide;
(4) the process for production of an emulsion coating material described in (1) above, wherein an acidic dispersion/solution having a pH of 4.0 or lower is adjusted to a pH of 5.0 to 11.0;
(5) an emulsion coating material containing photocatalyst composite particles and a resin component,
   the photocatalyst composite particles being composed of functional photocatalyst composite particles in which calcium phosphate has been precipitated and adhered to the surface of titanium oxide, wherein the surface of titanium oxide is uniformly coated with the precipitated calcium phosphate,
   the particle size distribution of the photocatalyst composite particles as determined by the laser scattering method is constant within the range of 80 to 600nm, the ratio of calcium phosphate in said particles is 0.1 to 50 wt%, the volume-based mean particle diameter of said particles is within the range of 50 to 1000nm, and the amount of said particles in the entire emulsion coating material in terms of the ratio of the solid content of the emulsion coating material is 1 to 20 wt%,
   said emulsion coating material having been produced by the process defined in claim 1; and
(6) a film made from the emulsion coating material described in (5) above, wherein the thickness of the film is 1 to 20 µm.

The following provides a more detailed explanation of the present invention.

The present invention is a process as detailed herein above for production of an emulsion coating material containing photocatalyst composite particles and a resin component. The process comprises preparing photocatalyst composite particles in which calcium phosphate is re-precipitated and adhered to the surface of titanium oxide by adjusting the pH of an aqueous acidic dispersion/solution having a pH of 4.0 or lower, in which titanium oxide is dispersed and phosphate ions and calcium ions are dissolved, to the alkaline side of the pH of the dispersion/solution, and incorporating the resultant dispersion of photocatalyst composite particles in an aqueous organic coating material.

In addition, the present invention is the above-mentioned emulsion coating material, wherein the photocatalyst composite particles are composed of highly functional photocatalyst composite particles in which calcium phosphate has been precipitated and adhered to the surface of titanium oxide, wherein the surface of titanium oxide is uniformly coated at high purity with the precipitated calcium phosphate, the particle size distribution of the photocatalyst composite particles as determined by the laser scattering method is constant within the range of 80 to 600nm, the ratio of calcium phosphate in said particles is 0.1 to 50 wt%, the volume-based mean particle diameter of said particles is within the range of 50 to 1000nm, and the amount of said particles in the entire emulsion coating material in terms of the ratio of the solid content of the emulsion coating material is 1 to 20 wt%. Moreover, the present invention is a film made from the above-mentioned emulsion coating material, wherein the thickness of the film is 1 to 20 µm.

The process for production of an emulsion coating material of the present invention is composed of a first step in which photocatalyst composite particles are produced by adhering calcium phosphate to titanium oxide, and a second step, following the first step, in which a dispersion of the photocatalyst composite particles and a resin component are mixed to produce an emulsion coating material.

In the above-mentioned first step, photocatalyst composite particles, in which calcium phosphate is re-precipitated and adhered to the surface of titanium oxide, are produced by adjusting the pH of an aqueous acidic dispersion/solution having a pH of 4.0 or lower, in which titanium oxide is dispersed and phosphate ions and calcium ions are dissolved, to the alkaline side of the pH of the dispersion/solution, and preferably to a pH of 5.0 to 11.0.

Although there are no particular limitations on the form of the photocatalyst composite particles obtained in the first step, when considering that calcium phosphate has an action of adsorbing proteins and various types of aqueous soiling and demonstrates superior adsorption thereto, and titanium oxide has a photocatalytic action and demonstrates a superior photocatalytic function, the form of the photocatalyst composite particles is preferably such that a portion of the surface of the titanium oxide is coated with calcium phosphate. In addition, in the case of coating the resulting emulsion coating material onto an exterior wall, and the like, the photocatalyst composite particles preferably have a hydrophilic function to allow soiling to be easily washed off by rain.

Next, an explanation is provided of each of the components used in the first step. Any suitable titanium oxide may be used as the titanium oxide provided it demonstrates a photocatalytic function, and for example, titanium oxide having a particle diameter of about 1 nm to several µm is preferably used. In addition, porous titanium oxide is more preferably used, and in this case, since the surface area of the particles increases, even greater photocatalytic performance is obtained. Although there are no particular limitations on the pore diameter of the pores of the titanium oxide, the pore diameter is preferably 1 nm to 0.1 µm from the viewpoint of efficiently adsorbing moisture and organic components.

In addition, the crystal type of the titanium oxide is preferably anatase since this allows the obtaining of higher photocatalytic performance. Moreover, the form of the titanium oxide is preferably a powder, slurry, neutral titania sol or acidic titania sol and the like, and an acidic titania sol having favorable dispersibility is more preferable. Although acidic titania sols are normally not used as photocatalysts since they end up aggregating if the pH exceeds 4, in the present invention, since titanium oxide is used under acidic conditions of a pH of 4 or lower, as will be described later, an acidic titania sol can be preferably used. Furthermore, although acidic titania sols include hydrochloric acid titania sols and nitric acid titania sols, a hydrochloric acidtitania sol is particularly preferably used in the process of the present invention.

Although there are no particular limitations on the calcium phosphate, one or more types selected from the group consisting of apatite, tricalcium phosphate and octacalcium phosphate are preferably used. Apatite refers to blue apatite, examples of which include hydroxyapatite, fluoride apatite, carbonate apatite and silver apatite.

Calcium phosphates such as apatite have a superior ability to adsorb proteins, such as bacteria, as well as aqueous soiling (such as perspiration, finger marks and water-based ink) . On the other hand, the adsorption ability of titanium oxide is inferior to that of calcium phosphate. Thus, by forming a calcium phosphate coating on a portion of the surface of titanium oxide, proteins and various types of soiling components are efficiently adsorbed by the calcium phosphate, and can then be decomposed by the photocatalytic oxidation-reduction action of titanium oxide.

In consideration of such action of calcium phosphate and titanium oxide, the coating rate of the calcium phosphate is preferably 1 to 99% (percent surface area). If the coating rate is less than 1%, the adsorption effect of the calcium phosphate is not adequately obtained, while if the coating rate exceeds 99%, it becomes difficult to obtain the photocatalytic effect of the titanium oxide since proportion of the exposed surface of the titanium oxide is low. The coating rate is more preferably about 2 to 80% and even more preferably about 5 to 70%.

Although there are no particular limitations on the thickness of the calcium phosphate coating, it is preferably about 1 nm to 3 µm, and more preferably, about 1 nm to 2 µm from the viewpoint of photocatalytic function and cost. In addition, there are no particular limitations on the form of the calcium phosphate, and various forms can be used. For example, the calcium phosphate may be in the form of layers, fine strips or fine particles.

Namely, the photocatalyst composite particles underlying the present invention may be in the form of having a calcium phosphate coating layer formed on a portion of the surface of titanium oxide, or in the form of having a portion of the surface of titanium oxide adhered to and coated with calcium phosphate in the form of fine strips or fine particles . The form in which calcium phosphate in the form of fine particles is uniformly sporadically coated over the surface of the titanium oxide is most preferable, and in this case, the coating rate as described above may be 30% or less, and for example, about 1 to 10%.

In the process of the present invention, although there are no particular limitations on the acid used to adjust the pH of the aqueous dispersion/ solution to a pH of 4 or lower, an acid such as hydrochloric acid, sulfuric acid, nitric acid, acetic acid or formic acid is preferably used. Hydrochloric acid is preferably used since ionic components are easily dissipated from solvent resulting in favorable storage stability of an emulsion coating material. The concentration of the hydrochloric acid is preferably 1 to 10 N, and more preferably, 2 to 6 N. In addition, the pH of the dispersion/ solution is preferably adjusted to a pH of 1.5 to 3.0. As a result of making the pH within the above range, calcium phosphate can be adequately dissolved in the aqueous dispersion/solution.

Photocatalyst composite particles are prepared by adjusting the pH of the previously described acidic aqueous dispersion/solution to the alkaline side of the pH of the dispersion/solution, and adhering calcium phosphate to the surface of titanium oxide by re-precipitating it thereon. In this case, examples of base preferably used to adjust the pH of the dispersion/solution having a pH of 4 or lower to a pH of 5 to 11 include aqueous ammonia, sodium hydroxide and potassium hydroxide. Aqueous ammonia is preferably used since ionic components are easily dissipated from solvent resulting in favorable durability of films. The concentration of the aqueous ammonia is preferably 5 to 50%, and more preferably, 20 to 30%. In addition, the pH of the dispersion/solution having a pH of 4 or lower is preferably adjusted to a pH of 8.0 to 10.0. As a result of making the pH to be within the above ranges, calcium phosphate can be adequately precipitated on the surface of the titanium oxide.

Next, an explanation is provided of an embodiment of a process for production of photocatalyst composite particles using the components described above. Calcium chloride and phosphoric acid, for example, are added to pure water containing hardly any other coexistent ionic species. Although the calcium chloride and phosphoric acid react in the water to obtain calcium phosphate, since the calcium phosphate is insoluble in water, it ends up precipitating. However, since calcium phosphate is soluble in water under acidic conditions, by adding an acid such as dilute hydrochloric acid to adjust the pH of the aqueous solution to 4 or lower, an aqueous solution is obtained in which calcium phosphate is dissolved therein. Titanium oxide is then dispersed in the aqueous solution to prepare a dispersion/solution.

Next, when a base such as aqueous ammonia is added to the dispersion/solution to adjust the pH thereof to 5 to 11, the calcium phosphate dissolved in the dispersion/ solution precipitates on the surface of the titanium oxide, thereby obtaining photocatalyst composite particles in which the titanium oxide is coated with the calcium phosphate.

An apatite photocatalyst is known as an example of the prior art in which a pseudo body fluid is used to support apatite on the surface of titanium oxide. However, since it was difficult to control particle size distribution and morphology (shape) in the material of the prior art, there were variations in particle size diameter and morphology, thereby placing limitations on increasing the decomposition activity thereof. In addition, when considering from the viewpoints of the production process and production efficiency, due to the slow rate of crystal growth of the material of the prior art, there were limitations on production in terms of producing an industrial product.

In contrast, in the process of the present invention, a material in which calcium phosphate is re-precipitated and supported by using a re-precipitation method is extremely superior in terms of productivity and quality, can be volume-produced easily and in a short period of time, and the compositional ratio of the resulting product can be precisely controlled while also achieving control of particle size distribution and morphology (shape) that was unable to be achieved with the material of the prior art, thereby resulting in a constant molecular size distribution enabling decomposition activity to be simultaneously controlled and resulting in higher activity.

The photocatalyst composite particles underlying the present invention, in which calcium phosphate is supported on the surface of titanium oxide, have a particle structure in which calcium phosphate is re-precipitated on the surface of the titanium oxide by a re-precipitation method resulting in porous calcium phosphate being uniformly supported on the surface of the titanium oxide, the particle size distribution of the particles as determined by the laser scattering method is controlled to be constant within the range of 80 to 600 nm, the ratio of calcium phosphate in the material is 0.1 to 50 wt%, and the volume-based mean particle diameter of the material is within the range of 50 to 1000 nm.

In this manner, according to the process for production of an emulsion coating material of the present invention, favorable productivity can be obtained since the above-mentioned photocatalyst composite particles can be easily produced without using a pseudo body fluid containing numerous Na⁺, Cl⁻ or other ions . In addition, aggregation of the resin component (described below) can be prevented, even when in the form of an emulsion coating material.

In the process of the present invention, the step for producing the photocatalyst composite particles is not limited to the previously described embodiment. For example, acid may be added to pure water in advance to adjust the pH to 4 or lower at the stage of preparing the dispersion/solution, followed by adding calcium chloride and phosphoric acid. In addition, the titanium oxide may be dispersed in water in advance. Namely, each component (calcium chloride, phosphoric acid and titanium oxide) may be added at any time provided a dispersion/solution is able to be prepared in which titanium oxide is dispersed and calcium phosphate is dissolved.

The weight ratio of calcium phosphate to titanium oxide in photocatalyst composite particles obtained in this manner is 0.1:99.9 to 50:50, preferably 1:99 to 25:75, and more preferably 2:98 to 20:80. As a result of making the weight ratio within these ranges, the surface of the titanium oxide can be coated without impairing the photocatalytic function thereof, thereby making it possible to prevent decomposition of the resin component contained in the aqueous coating material when in the form of the emulsion coating material.

Next, in the previously mentioned second step, the photocatalyst composite particles obtained in the first step are mixed with the resin component described below to produce an emulsion coating material. The emulsion coating material of the present invention is obtained not by using the photocatalyst composite particles in the form of dry particles, but rather by mixing a dispersion thereof with the resin component. In the present invention, the dispersibility of the photocatalyst composite particles is dramatically improved by mixing the photocatalyst composite particles as a dispersion with the resin component and water.

Here, an explanation is provided of the resin component used in the second step. There are no particular limitations on the resin component used in the present invention provided it contains an aqueous organic coating material, examples of which include synthetic resin emulsions of acrylic resin, silicone resin, acrylic-silicone resin, epoxy resin, vinyl acetate resin, polyurethane resin, polystyrene resin or fluorine resin. Acrylic-silicone resin emulsions are particularly preferable.

Furthermore, the content of the silicone component in the acrylic-silicone resin is preferably 1 to 60% by weight and, more preferably, 5 to 40% by weight. If the content of the silicone component is excessively low, the resin becomes susceptible to decomposition by the photocatalyst composite particles as previously described. On the other hand, if the silicone content is excessively high, in the case of repeatedly coating the resulting emulsion coating material, it becomes difficult for the coating material to adhere to the previously formed film resulting in increased susceptibility to cracking of the newly formed film.

The amount of the photocatalyst composite particles in the entire emulsion coating material in terms of the ratio of the solid content thereof is 1 to 20% by weight, more preferably 2 to 15% by weight and, even more preferably, 3 to 10% by weight. If the ratio of the solid content of the photocatalyst composite particles is below these ranges, photocatalytic effects are reduced due to the low amount of photocatalyst composite particles in the film, while on the other hand, if the ratio of the solid content of the photocatalyst composite particles exceeds these ranges, the weather resistance of the film decreases.

Moreover, the solid content of the emulsion coating material is preferably 2 to 30% by weight, more preferably 2 to 20% by weight and, even more preferably, 3 to 10% by weight. As a result of making the solid content of the emulsion coating material to be within these ranges, the thickness of the film formed becomes uniform, thereby making this preferable.

Furthermore, film formation assistants such as butyl cellosolve, butyl carbitol, triethylene glycol or texanol may also be used, as necessary, in the coating material within a range that does not deviate from the gist of the present invention. In addition, additives such as antifoaming agents, thickeners, freezing stabilizers, lubricants, pigments, water-soluble resins, penetration assistants, ultraviolet absorbers or antioxidants may also be incorporated in the coating material, as necessary.

Coating of an emulsion coating material obtained in this manner onto an object to be coated can be carried out by ordinary methods and means such as a brush, roller, air sprayer or airless sprayer. In addition, the thickness of the formed film is preferably reduced so as to adapt to expansion and contraction of the material of the object to be coated. The thickness of the film is preferably 1 to 20 µm, more preferably 1 to 10 µm and, even more preferably, 2 to 8 µm. As a result of making the thickness of the film within these ranges, the formation of an uneven film can be prevented, thereby allowing the obtaining of a film of uniform film thickness. Moreover, the emulsion coating material is preferably repeatedly coated a plurality of times to ensure a uniform film thickness.

According to the process for production of an emulsion coating material of the present invention, since photocatalyst composite particles can be easily produced without increasing the concentrations of ions such as Na⁺ or Cl⁻, productivity is favorable and aggregation of the resin component is inhibited, thereby resulting in superior storage stability even when in the form of an emulsion coating material. In addition, there is extremely little yellowing or deterioration of a film formed by the emulsion coating material caused by adherence of oil or moisture, and superior durability and retention of aesthetic value are obtained. Moreover, the resulting film is stable since direct contact between the resin component and the titanium oxide is impaired even when in the form of an organic coating material.

The present invention offers the effects indicated below.
(1) An emulsion coating material can be provided enabling inhibition of deterioration of coating material components by incorporating in the coating material, photocatalyst composite particles obtained by forming calcium phosphate on the surface of titanium oxide, which calcium phosphate is re-precipitated from an aqueous acidic solution having a pH of 4.0 or lower in which the titanium oxide is dispersed and phosphate ions and calcium ions are dissolved.
(2) According to the present invention, a process for production of an emulsion coating material can be provided which, together with being able to enhance productivity of the photocatalyst composite particles by being able to coat calcium phosphate onto the surface of titanium oxide by a simple procedure, is able to improve the organic substance photodecomposition function and the weather resistance of a coating material or film containing the photocatalyst composite particles.
(3) A film made from the above-mentioned emulsion coating material can be provided.
(4) The calcium phosphate formed on the surface of the titanium oxide by the re-precipitation method can be uniformly precipitated on the surface of the titanium oxide, and in the present process, highly pure calcium phosphate can be formed for which reaction conditions can be arbitrarily controlled, and contamination by other components causing problems (such as in the case of using a pseudo body fluid) is reliably prevented.
(5) An emulsion coating material can be produced that is unaffected by coexistent ionic species.
(6) Favorable storage stability and superior photocatalytic activity can be demonstrated without having to decant the dispersion.

### BRIEF DESCRIPTION OF THE DRAWINGS

FIG. 1 is a graph of time-based changes in optical absorbance indicating the results of a photocatalytic activity test (methylene blue decomposition test);
FIG. 2 is a graph of time-based changes in optical absorbance indicating the results of a photocatalytic activity test (methylene blue test);
FIG. 3 is a graph of time-based changes in gloss retention rate indicating the results of a photocatalytic activity test (weather resistance test);
FIG. 4 is a graph of time-based changes in color difference indicating the results of a photocatalytic activity test (weather resistance test);
FIG. 5 is a graph of time-based changes in optical absorbance indicating the results of a photocatalytic activity test (methylene blue decomposition test);
FIG. 6 is a graph of time-based changes in gloss retention rate indicating the results of a photocatalytic activity test (weather resistance test); and
FIG. 7 is a graph of time-based changes in color difference indicating the results of a photocatalytic activity test (weather resistance test).

### BEST MODE FOR CARRYING OUT THE INVENTION

Although the following provides a detailed explanation of the present invention based on examples thereof, the present invention is not limited by the following examples. Furthermore, special grade reagents manufactured by Wako Pure Chemical Industries are used for the reagents used in the examples for which the manufacturer is not specified. Values for pH were measured using the "F-21 Desktop pH Meter" manufactured by Horiba Seisakusho. In addition, the term "%" indicates "percent by weight".

### Examples

[Test 1: Evaluation of Emulsion Coating Materials by Differences in Method Used to Produce Photocatalyst Composite Particles]

### (Production of Photocatalyst Composite Particle Dispersion 1)

Calcium chloride and phosphoric acid were dissolved in 1 L of ion exchange water to a Ca²⁺ concentration of 5.97 mM and an HPO₄²⁻ concentration of 3.59 mM to prepare an aqueous solution having a pH of 1.5 with 5 N hydrochloric acid. 10 g of photocatalytic titanium oxide ("Super Titania F4", Showa Titania) was dispersed in the aqueous solution to obtain a dispersion/solution.

The pH of the dispersion/solution was adjusted to 9.0 to 10.0 with 25% aqueous ammonia followed by allowing to react while stirring for 6 hours at 23°C, precipitating calcium phosphate on the surface of titanium oxide, decanting three times, and adjusting the pH to a final pH of 9.0 with 25% aqueous ammonia to prepare the photocatalyst composite particle dispersion 1 shown in Table 1.

### (Production of Photocatalyst Composite Particle Dispersion 2)

The photocatalyst composite particle dispersion 2 shown in Table 1 was prepared in the same manner as the photocatalyst composite particle dispersion 1, with the exception of changing the incorporated amount of ion exchange water and using 29.4 g of hydrochloric acid titania sol ("TKS-201 (34%)", Tayca) for the photocatalytic titanium oxide.

### (Production of Photocatalyst Composite Particle Dispersion 3: Conventional Formula)

A pseudo body fluid was prepared using a 10% dispersion/solution of photocatalytic titanium oxide, along with NaCl, KCl, CaCl₂, KH₂PO₄, Na₂HPO₄, and ion exchange water so that the concentration of Na⁺ was 160 mM, K⁺ was 3.64 mM, Ca²⁺ was 5.97 mM, Cl⁻ was 169 mM and HPO₄²⁻ was 3.59 mM. Photocatalytic titanium oxide ("Super Titania F4", Showa Titania) was then added to a concentration of 1% of the pseudo body fluid (1 L) followed by allowing to react by stirring for 6 hours at 37°C. After decanting three times, the pH was adjusted to a final pH of 9.0 with 25% aqueous ammonia to prepare the photocatalyst composite particle dispersion 3 shown in Table 1.

### (Production of Photocatalyst Composite Particle Dispersion 4: Composite Formula)

10 g of photocatalytic titanium oxide ("Super Titania F4, Showa Titania) and calcium phosphate ("HAP200", Taihei Chemicals) to a concentration of 0.06 mM were added to 1 L of ion exchange water to prepare a dispersion. After decanting three times, the pH was adjusted to a final pH of 9.0 with 25% aqueous ammonia to prepare the photocatalyst composite particle dispersion 4 shown in Table 1.

**[Table 1]**

| Components | | Photocatalyst Composite Particles | | | |
|---|---|---|---|---|---|
| | | Dispersion 1 | Dispersion 2 | Dispersion 3 | Dispersion 4 |
| Ion exchange water (L) | | 1 | 0.98 | 1 | 1 |
| Incorporated ion concentrations (mM) | Sodium ion | - | - | 160 | - |
| | Potassium ion | - | - | 3.64 | - |
| | Calcium ion | 5.97 | 5.97 | 5.97 | - |
| | Chloride ion | - | - | 169 | - |
| | Phosphate ion | 3.59 | 3.59 | 3.59 | - |
| 5 N hydrochloric acid | | As suitable | As suitable | - | - |
| Titanium oxide (g) | | 10 | 29.4*¹ | 10 | 10 |
| HAP-200 (mM) | | - | - | - | 0.60 |
| 25% aqueous NH₃ | | As suitable | As suitable | As suitable | - |
| Final adjusted pH | | 9.0 | 9.31 | 9.0 | 9.0 |

| | | | | | |
|---|---|---|---|---|---|
| *1: Hydrochloric acid titania sol ("TKS-201 (34%)", Tayca) | | | | | |

### (Production of Emulsion Coating Materials)

Emulsion coating materials of Example 1, Example 2, Comparative Example 1 and Comparative Example 2 were produced according to the formulas shown in Table 2 using the photocatalyst composite particle dispersions 1 to 4 prepared in the manner described above. In Table 2, a resin component having the trade name "Polydurex G-659" (Asahi Kasei Chemicals, solid content: 42%) was used for the resin component. In addition, 0.1% of an antifoaming agent ("BYK-028", BYK), 4.0% of a film formation assistant ("Texanol", Eastman Chemical) and a suitable amount of a thickener ("SN Thickener 618", San Nopco) were added to each of the examples and comparative examples. Moreover, the emulsion coating materials were obtained after adjusting the pH to a final pH of 9.0 with 25% aqueous ammonia. The viscosities (Ford Cup No. 4) of each of the resulting emulsion coating materials are shown in Table 2.

**[Table 2]**

| Components (parts by weight) | | Example 1 | Example 2 | Comparat ive Example 1 | Comparat ive Example 2 |
|---|---|---|---|---|---|
| Resin component | | 33.0 | 33.0 | 33.0 | 33.0 |
| 1% dispersion | Dispersion 1 | 66.0 | - | - | - |
| | Dispersion 2 | - | 66.0 | - | - |
| | Dispersion 3 | - | - | 66.0 | - |
| | Dispersion 4 | - | - | - | 66.0 |
| BYK-028 | | 0.1 | 0.1 | 0.1 | 0.1 |
| Texanol | | 4.0 | 4.0 | 4.0 | 4.0 |
| SN Thickener 618 | | As suitable | As suitable | As suitable | As suitable |
| 25% aqueous NH₃ (final pH: 9.0) | | As suitable | As suitable | As suitable | As suitable |
| Viscosity (Ford Cup No. 4(s)) | | 18.3 | 21.1 | 18.2 | 18.1 |

### [Evaluation of Photocatalytic Activity]

### (Methylene Blue Decomposition Test by Measurement of Optical Absorbance)

An aqueous primer (trade name: "Aqueous Ceramitone (beige: Japan Paint Manufacturers Association Standard Paint Colors 2003 B Edition, B15-50B (5Y5R/1) approximate color", Fujikura Kasei) was coated onto an aluminumplate (5cm×5cm) and dried followed by spray-coating each of the emulsion coating materials of Example 1 and Comparative Examples 1 and 2 thereon to prepare test pieces.

Pretreatment was carried out by irradiating the test pieces for 3 hours or more so that each coated surface was irradiated at an intensity of 1 mW/cm² using a BLB black light. Next, an acrylic resin ring (outer diameter: 45 mm, inner diameter: 40 mm, height: 30 mm) was fastened to the coated surface using a non-aqueous adhesive . 30 mL of an adsorption solution (12 ppm methylene blue aqueous solution) was poured into the ring followed by sealing with a glass cover (50 mm × 50 mm × 0.5 mm) and allowing to stand undisturbed for 12 hours or more in a dark location to allow the methylene blue aqueous solution to be adequately adsorbed by the film.

Subsequently, the adsorption solution was discharged and after gently washing the inside of the ring with distilled water, 30 mL of 8 ppm methylene blue aqueous solution was poured in and, again, covering and sealing with the glass cover. The time-based change in discoloration of the aqueous solution due to decomposition of methylene blue was measured in terms of optical absorbance by irradiating the coated surface with a BLB black light so as to be irradiated at an intensity of 1 mW/cm². A digital colorimeter ("Miniphoto 10", Sanshin Kogyo, filter: 660 nm) was used to measure optical absorbance.

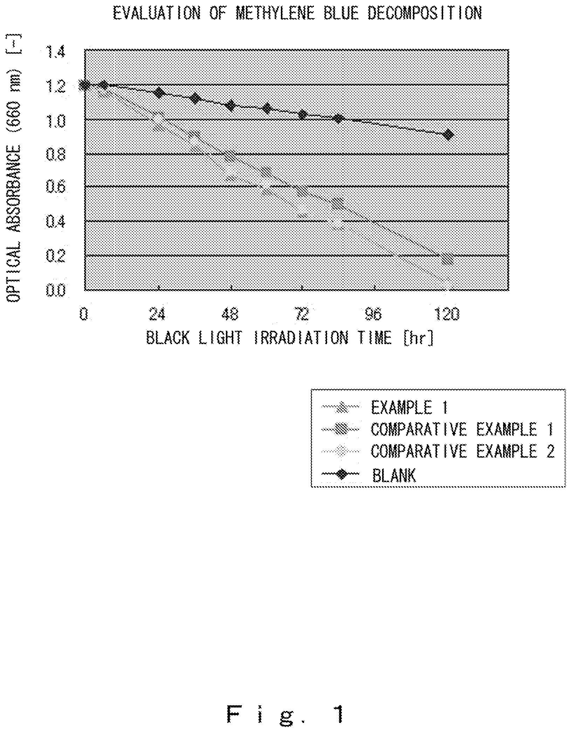

Furthermore, decomposition of methylene blue was evaluated based on the criteria indicated below. The results are shown in Table 3 and FIG. 1.
⊚: Optical absorbance of less than 0.5 after 72 hours
○: Optical absorbance of 0.5 to less than 0.7 after 72 hours
Δ: Optical absorbance of 0.7 to less than 1.0 after 72 hours
×: Optical absorbance of 1.0 or more after 72 hours

Furthermore, in the following Tables 3 to 6, "blank" refers to results obtained by incorporating pure water instead of photocatalyst composite particle dispersions.

**[Table 3]**

| | | Blank | Example 1 | Comp. Ex. 1 | Comp. Ex. 2 |
|---|---|---|---|---|---|
| Optical absorbance | 0 hr | 1.200 | 1.202 | 1.202 | 1.201 |
| | After 6 hrs | 1.197 | 1.162 | 1.173 | 1.167 |
| | After 24 hrs | 1.153 | 0.970 | 1.010 | 1.000 |
| | After 36 hrs | 1.125 | 0.844 | 0.899 | 0.877 |
| | After 48 hrs | 1.083 | 0.666 | 0.780 | 0.697 |
| | After 60 hrs | 1.065 | 0.591 | 0.686 | 0.608 |
| | After 72 hrs | 1.026 | 0.460 | 0.573 | 0.466 |
| | After 84 hrs | 1.008 | 0.385 | 0.503 | 0.387 |
| | After 120 hrs | 0.911 | 0.041 | 0.179 | 0.027 |
| Evaluation | | × | ⊚ | ○ | ⊚ |

In addition, in Example 2, a decomposition test was carried out in the same manner as the methylene blue decomposition test based on measurement of optical absorbance as described above, with the exception of pouring 30 mL of an adsorption solution (8 ppm methylene blue aqueous solution) into the ring, sealing with a glass cover (50 mm × 50 mm × 0.5 mm), allowing to stand undisturbed for 12 hours or more in a dark location to allow the methylene blue aqueous solution to be adequately adsorbed by the film, discharging the adsorption solution and gently washing the inside of the ring with distilled water, followed by pouring in 30 mL of 4 ppm methylene blue aqueous solution and, again, covering and sealing with the glass cover.

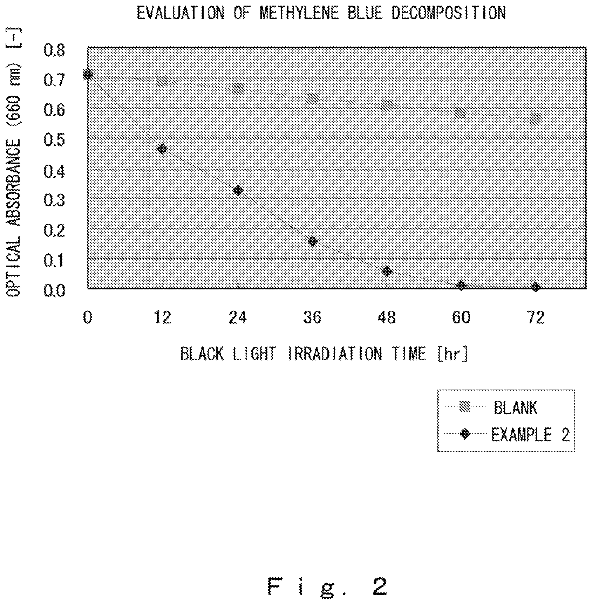

Furthermore, decomposition of methylene blue was evaluated based on the criteria indicated below. The results are shown in Table 4 and FIG. 2.
⊚: Optical absorbance of less than 0.1 after 48 hours
○: Optical absorbance of 0.1 to less than 0.3 after 48 hours
Δ: Optical absorbance of 0.3 to less than 0.5 after 48 hours
×: Optical absorbance of 0.5 or more after 48 hours

**[Table 4]**

| | | Blank | Example 2 |
|---|---|---|---|
| Optical absorbance | 0 hr | 0.713 | 0.713 |
| | After 6 hrs | 0.690 | 0.464 |
| | After 24 hrs | 0.664 | 0.322 |
| | After 36 hrs | 0.635 | 0.157 |
| | After 48 hrs | 0.611 | 0.055 |
| | After 60 hrs | 0.588 | 0.012 |
| | After 72 hrs | 0.563 | 0.004 |
| Evaluation | | × | ⊚ |

### (Weather Resistance Test According to Gloss Retention Rate and Color Difference)

The above-mentioned test pieces were irradiated for 4 hours using an ultraviolet irradiation device ("Eye Super UV Tester W-151", Iwasaki Electric) at a black panel temperature of 63°C and humidity of 50% RH so that each surface of the test pieces was irradiated at an intensity of 1000 mW/cm². Subsequently, the inside of the tank was set to a temperature of about 30°C and humidity of 98% or higher, and moisture was made to condense within the tank by holding at those conditions for 4 hours.

Based on the above-mentioned irradiation and moisture condensation being defined as one cycle, gloss retention rate and color difference were evaluated every 120 hours. A glossimeter and color difference meter ("Model SM-T SM Color Computer", Suga Test Instruments) were used to measure gloss and color difference.

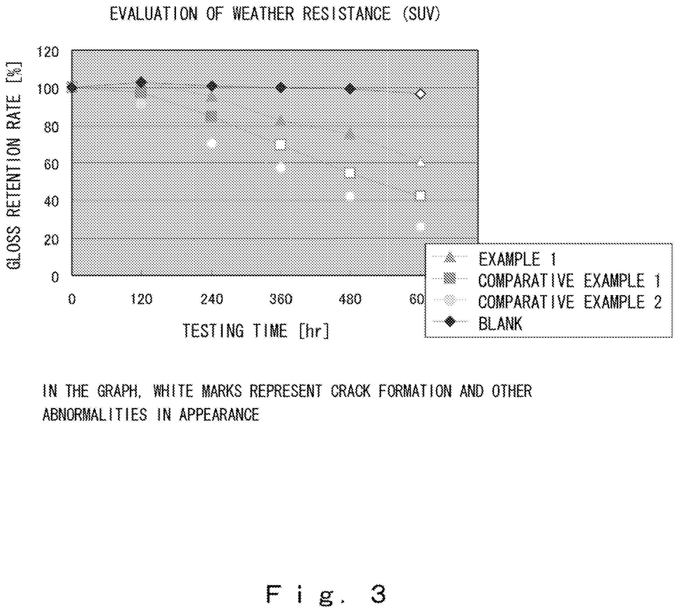

Furthermore, gloss retention rate was evaluated according to the criteria indicated below. The results are shown in Table 5 and FIG. 3.
⊚: No abnormalities in appearance and gloss retention rate of 80% or more after 480 hours
○: No abnormalities in appearance and gloss retention rate of 50% or more after 480 hours
Δ: Crack formation or other abnormalities in appearance and gloss retention rate of 50% or more after 480 hours
×: Crack formation or other abnormalities in appearance and gloss retention rate of less than 50% after 480 hours

**[Table 5]**

| | | Blank | Example 1 | Comp. Ex. 1 | Comp. Ex. 2 |
|---|---|---|---|---|---|
| Gloss retention rate (%) | 0 hr | 100 | 100 | 100 | 100 |
| | After 120 hrs | 102.8 | 102.8 | 97.3 | 91.1 |
| | After 240 hrs | 101.1 | 95.8 | 84.8 | 70.3*² |
| | After 360 hrs | 100.3 | 82.4 | 69.4*² | 57.1*² |
| | After 480 hrs | 99.6 | 75.9 | 54.4*² | 42.1*² |
| | After 600 hrs | 96.8 | 60.8*² | 42.1*² | 25.6*² |
| Evaluation | | ⊚ | ○ | Δ | × |

| | | | | | |
|---|---|---|---|---|---|
| *2: Crack formation or other abnormalities in appearance | | | | | |

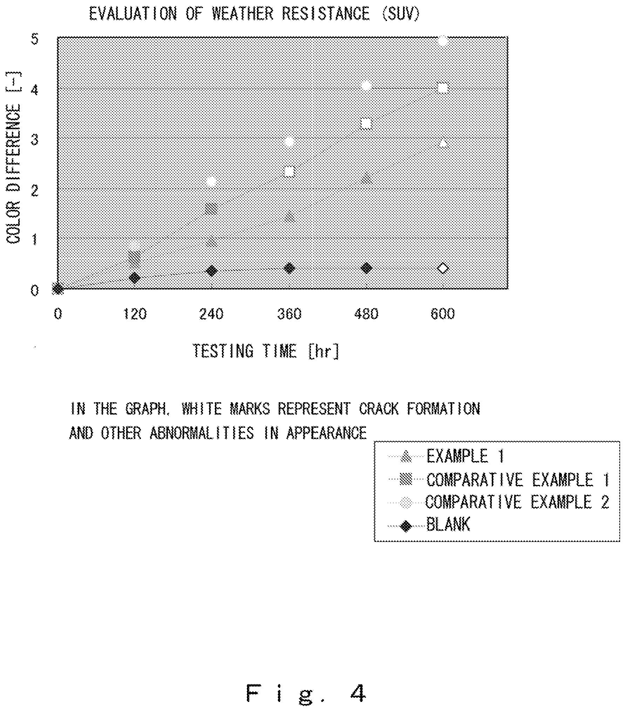

In addition, color difference was evaluated according to the criteria indicated below. The results are shown in Table 6 and FIG. 4.
⊚: No abnormalities in appearance and color difference of less than 1 after 480 hours
○: No abnormalities in appearance and color difference of 1 to less than 3 after 480 hours
Δ: Crack formation or other abnormalities in appearance and color difference of 1 to less than 3 after 480 hours
×: Crack formation or other abnormalities in appearance and color difference of 3 or more after 480 hours

**[Table 6]**

| | | Blank | Example 1 | Comp. Ex. 1 | Comp. Ex. 2 |
|---|---|---|---|---|---|
| Color difference | 0 hr | 0.00 | 0.00 | 0.00 | 0.00 |
| | After 120 hrs | 0.21 | 0.51 | 0.63 | 0.84 |
| | After 240 hrs | 0.36 | 0.95 | 1.59 | 2.12*³ |
| | After 360 hrs | 0.42 | 1.45 | 2.32*³ | 2.92*³ |
| | After 480 hrs | 0.42 | 2.20 | 3.27*³ | 4.05*³ |
| | After 600 hrs | 0.41 | 2.91*³ | 3.99*³ | 4.91*³ |
| Evaluation | | ⊚ | ○ | × | × |

| | | | | | |
|---|---|---|---|---|---|
| *3: Crack formation or other abnormalities in appearance | | | | | |

As is clear from Tables 3 to 6 and FIGS. 1 to 4, the emulsion coating materials obtained in the examples exhibited slow deterioration of gloss and color difference, and were able to demonstrate superior photocatalytic activity. In particular, the emulsion coating material using hydrochloric acid titania sol demonstrated superior methylene blue decomposition and had favorable photocatalytic activity. On the other hand, the emulsion coating materials obtained in Comparative Examples 1 and 2 exhibited rapid deterioration of gloss and color difference in comparison with the examples, and demonstrated inferior photocatalytic activity.

### [Test 2: Evaluation of Emulsion Coating Materials According to Differences in pH Values When Adjusting pH]

### (Production of Photocatalyst Composite Particle Dispersion 5)

Calcium chloride and phosphoric acid were added to 1 L of ion exchange water to a Ca²⁺ concentration of 1.99 mM and an HPO₄²⁻ concentration of 1.19 mM and dissolved by adjusting the pH of the aqueous solution to 1.5 with 5 N hydrochloric acid. 10 g of photocatalytic titanium oxide ("Super Titania F4", Showa Titania) was dispersed in the aqueous solution to obtain a dispersion/ solution. The pH of the dispersion/solution was adjusted to the pH value shown in Table 7 with 25% aqueous ammonia to precipitate calcium phosphate on the surface of titanium oxide. Subsequently, the pH was adjusted to the final pH value shown in Table 7 with 25% aqueous ammonia to prepare the photocatalyst composite particle dispersion 5 shown in Table 7.

### (Production of Photocatalyst Composite Particle Dispersions 6 to 11)

Photocatalyst composite particle dispersions 6 to 11 shown in Table 7 were prepared in the same manner as production of the photocatalyst composite particle dispersion 5, with the exception of adjusting to the pH values shown in Table 7 with 25% aqueous ammonia.

**[Table 7]**

| Components | | Photocatalyst Composite Particles | | | | | | |
|---|---|---|---|---|---|---|---|---|
| | | Dispersion 5 | Dispersion 6 | Dispersion 7 | Dispersion 8 | Dispersion 9 | Dispersion 10 | Dispersion 11 |
| Ion exchange water (L) | | 1 | 1 | 1 | 1 | 1 | 1 | 1 |
| Ion concentration (mM) | Calcium ion | 1.99 | 1.99 | 1.99 | 1.99 | 1.99 | 1.99 | 1.99 |
| | Phosphate ion | 1.19 | 1.19 | 1.19 | 1.19 | 1.19 | 1.19 | 1.19 |
| 5 N hydrochloric acid | | As suitable | As suitable | As suitable | As suitable | As suitable | As suitable | As suitable |
| Titanium oxide (q) | | 10 | 10 | 10 | 10 | 10 | 10 | 10 |
| 25% aqueous NH₃ (2 ml/min) | pH=5.0 to 5.5 | | | | As suitable | | | |
| | pH=7.0 to 7.5 | As suitable | | | | | | |
| | pH=8.5 to 9.0 | | As suitable | | | | | |
| | pH=9.5 to 10.0 | | | As suitable | | | | |
| | pH=10.5 to 11.0 | | | | | As suitable | | |
| | pH<5.0 | | | | | | As suitable | |
| | pH>11 | | | | | | | As suitable |
| Final adjusted pH | | 7.1 | 8.9 | 9.8 | 5.3 | 10.7 | 4.7 | 11.1 |

### (Production of Emulsion Coating Materials)

Emulsion coating materials of Examples 3 to 7, Comparative Example 3 and Comparative Example 4 were produced using the photocatalyst composite particle dispersions 5 to 11 prepared above according to the formulas shown in Table 8. In Table 8, a resin component having the trade name "Polydurex H-7000" (Asahi Kasei Chemicals, solid content: 42%) was used for the resin component.

In addition, 0.1% of an antifoaming agent ("BYK-028", BYK), 4.0% of a film formation assistant ("Texanol", Eastman Chemical) and a suitable amount of a thickener ("SN Thickener 618", San Nopco) were added to each of the examples. Moreover, in Examples 3 and 6 and Comparative Example 3, which used the photocatalyst composite particle dispersions 5, 8 and 10 having low final adjusted pH values, emulsion coating materials were produced after adjusting the final pH to 8.5 with 25% aqueous ammonia. The pH values and viscosities (Ford Cup No. 4) of each of the resulting emulsion coating materials are shown in Table 8.

In addition, a storage stability test was carried out on each of the emulsion coating materials.

The storage stability test consisted of investigating changes in the viscosities (Ford Cup method (seconds)) of emulsion coating materials stored for 2 months at 23°C. In addition, each of the emulsion coating materials were evaluated two months later according to the criteria indicated below. The results are shown in Table 8.
⊚: Dilution with water not required
○: Restored by diluting with less than 10% water (coatable)
Δ: Restored by diluting with 10% or more water (coatable)
×: Unable to be restored by diluting with water (uncoatable)

**[Table 8]**

| Components (parts by wt) | | | Example 3 | Example 4 | Example 5 | Example 6 | Example 7 | Comp. Ex. 3 | Comp. Ex. 4 |
|---|---|---|---|---|---|---|---|---|---|
| Resin component | | | 33.0 | 33.0 | 33.0 | 33.0 | 33.0 | 33.0 | 33.0 |
| 1% dispersion | | Disp.5 | 66.0 | - | - | - | - | - | - |
| | | Disp.6 | - | 66.0 | - | - | - | - | - |
| | | Disp.7 | - | - | 66.0 | - | - | - | - |
| | | Disp.8 | - | - | - | 66.0 | - | - | - |
| | | Disp.9 | - | - | - | - | 66.0 | - | - |
| | | Disp.10 | - | - | - | - | - | 66.0 | - |
| | | Disp.11 | - | - | - | - | - | - | 66.0 |
| BYK-028 | | | 0.1 | 0.1 | 0.1 | 0.1 | 0.1 | 0.1 | 0.1 |
| Texanol | | | 4.0 | 4.0 | 4.0 | 4.0 | 4.0 | 4.0 | 4.0 |
| SN Thickener 618 | | | As suitable | As suitable | As suitable | As suitable | As suitable | As suitable | As suitable |
| 25% aqueous NH₃ | | | As suitable | - | - | As suitable | - | As suitable | - |
| Final pH value | | | 8.5 | 8.7 | 9.3 | 8.5 | 10.2 | 8.5 | 10.7 |
| Initial viscosity (s) | | | 27.1 | 26.9 | 26.7 | 26.9 | 26.7 | 24.6 | 27.2 |
| Storage stabilit y | Viscosity (s) after 2 months at 23°C | | 27.4 | 27.4 | 29.5 | 28.0 | 34.2 | 52.5 | 44.6 |
| | Evaluation | | ⊚ | ⊚ | ⊚ | ⊚ | ○ | Δ | Δ |

### [Evaluation of Photocatalytic Activity]

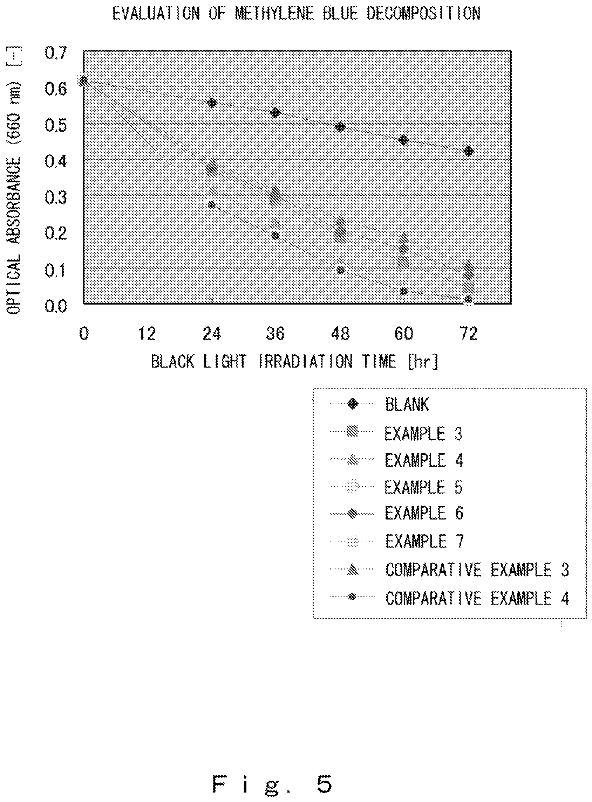

A methylene blue decomposition test was carried out on each of the emulsion coating materials in the same manner as in the case of Example 2 of Test 1. The results are shown in Table 9 and FIG. 5. Furthermore, in the following Tables 9 to 11, "blank" refers to results obtained by incorporating pure water instead of photocatalyst composite particle dispersions.

**[Table 9]**

| | | Blank | Ex.3 | Ex.4 | Ex.5 | Ex.6 | Ex.7 | Comp. Ex.3 | Comp. Ex.4 |
|---|---|---|---|---|---|---|---|---|---|
| Optical absorbance | 0 hr | 0.618 | 0.618 | 0.618 | 0.618 | 0.618 | 0.618 | 0.618 | 0.618 |
| | After 24 hrs | 0.556 | 0.368 | 0.312 | 0.277 | 0.375 | 0.272 | 0.392 | 0.274 |
| | After 36 hrs | 0.528 | 0.286 | 0.224 | 0.194 | 0.299 | 0.189 | 0.316 | 0.190 |
| | After 48 hrs | 0.488 | 0.186 | 0.117 | 0.095 | 0.204 | 0.090 | 0.235 | 0.095 |
| | After 60 hrs | 0.454 | 0.115 | 0.050 | 0.038 | 0.151 | 0.037 | 0.182 | 0.038 |
| | After 72 hrs | 0.421 | 0.043 | 0.014 | 0.012 | 0.080 | 0.012 | 0.106 | 0.013 |
| Evaluation | | × | ○ | ○ | ⊚ | ○ | ⊚ | ○ | ○ |

### (Weather Resistance Test According to Gloss Retention Rate and Color Difference)

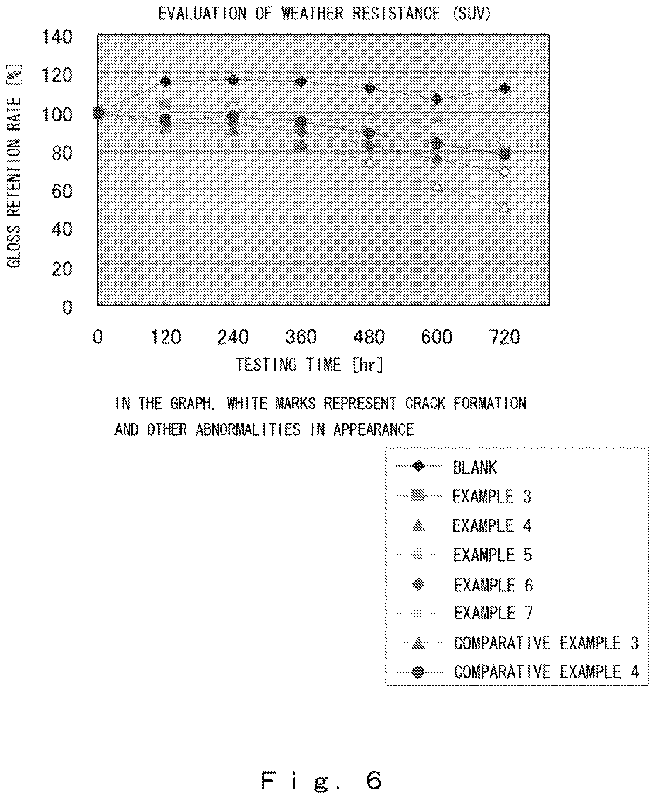

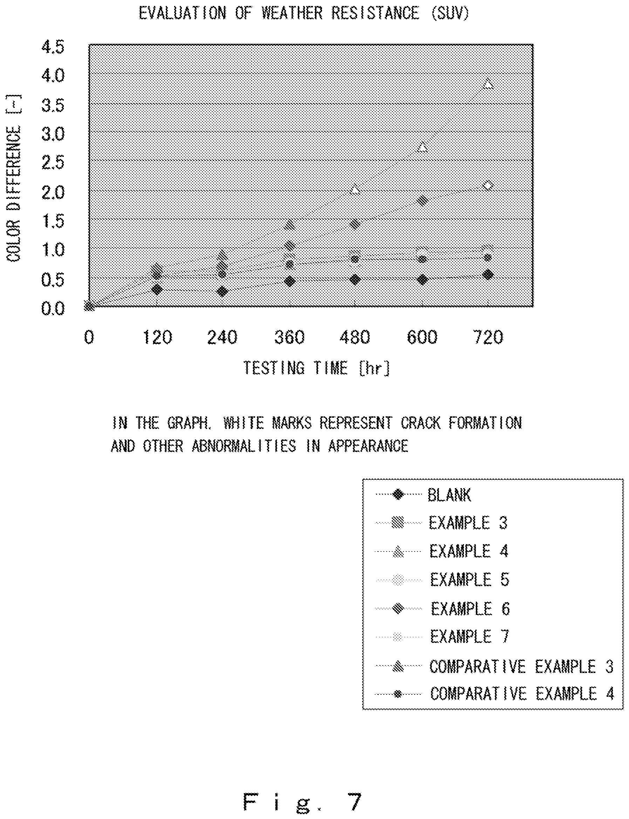

A weather resistance test was carried out in the same manner as in the case of Test 1. The results for gloss retention rate are shown in Table 10 and FIG. 6, while the results for color difference are shown in Table 11 and FIG. 7.

**[Table 10]**

| | | Blank | Ex.3 | Ex.4 | Ex.5 | Ex.6 | Ex.7 | Comp. Ex.3 | Comp. Ex.4 |
|---|---|---|---|---|---|---|---|---|---|
| Gloss retention rate (%) | 0 hr | 100 | 100 | 100 | 100 | 100 | 100 | 100 | 100 |
| | After 120 hrs | 115.6 | 103.4 | 99.7 | 98.4 | 94.2 | 99.1 | 91.8 | 96.3 |
| | After 240 hrs | 116.6 | 102.3 | 101.7 | 101.6 | 94.1 | 100.6 | 90.6 | 97.7 |
| | After 360 hrs | 116.0 | 96.3 | 95.0 | 97.7 | 89.3 | 96.9 | 83.2 | 94.9 |
| | After 480 hrs | 112.6 | 96.6 | 95.7 | 95.4 | 82.6 | 95.1 | 74.3*⁴ | 89.2 |
| | After 600 hrs | 106.6 | 93.8 | 90.5 | 91.6 | 75.4 | 90.7 | 62.2*⁴ | 83.8 |
| | After 720 hrs | 111.9 | 83.1 | 83.8 | 84.7 | 69.0*⁴ | 84.3 | 51.1*⁴ | 77.7 |
| Evaluation | | ⊚ | ⊚ | ⊚ | ⊚ | ⊚ | ⊚ | Δ | ⊚ |

| | | | | | | | | | |
|---|---|---|---|---|---|---|---|---|---|
| *4: Crack formation or other abnormalities in appearance | | | | | | | | | |

**[Table 11]**

| | | Blank | Ex.3 | Ex.4 | Ex.5 | Ex.6 | Ex.7 | Comp. Ex.3 | Comp. Ex.4 |
|---|---|---|---|---|---|---|---|---|---|
| Color difference | 0 hr | 0.00 | 0.00 | 0.00 | 0.00 | 0.00 | 0.00 | 0.00 | 0.00 |
| | After 120 hrs | 0.29 | 0.61 | 0.50 | 0.51 | 0.53 | 0.49 | 0.67 | 0.52 |
| | After 240 hrs | 0.27 | 0.62 | 0.55 | 0.56 | 0.70 | 0.54 | 0.89 | 0.54 |
| | After 360 hrs | 0.43 | 0.82 | 0.73 | 0.74 | 1.05 | 0.76 | 1.41 | 0.71 |
| | After 480 hrs | 0.45 | 0.87 | 0.77 | 0.79 | 1.41 | 0.85 | 2.01*⁵ | 0.80 |
| | After 600 hrs | 0.45 | 0.93 | 0.86 | 0.89 | 1.83 | 0.90 | 2.74*⁵ | 0.80 |
| | After 720 hrs | 0.56 | 0.96 | 0.98 | 0.90 | 2.07*⁵ | 0.88 | 3.85*⁵ | 0.84 |
| Evaluation | | ⊚ | ⊚ | ⊚ | ⊚ | ○ | ⊚ | Δ | ⊚ |

| | | | | | | | | | |
|---|---|---|---|---|---|---|---|---|---|
| *5: Crack formation or other abnormalities in appearance | | | | | | | | | |

As is clear from Tables 9 to 11 and FIGS. 5 to 7, the emulsion coating materials of the examples are able to demonstrate favorable storage stability and superior photocatalytic activity without having to decant during production.

On the other hand, gloss and color difference of the emulsion coating material of Comparative Example 3 deteriorated more rapidly than that of the examples, and photocatalytic activity and storage stability were inferior. This is thought to be the result of the calcium phosphate being unable to adequately precipitate on the surface of the titanium oxide since the final adjusted pH value of the dispersion contained in the emulsion coating material was lower than 5. In addition, although the emulsion coating material of Comparative Example 4 was able to demonstrate photocatalytic activity similar to that of the examples, storage stability was inferior to the examples of the present invention. According to the process for production of an emulsion coating material of the present invention, the productivity of the photocatalyst composite particles can be enhanced and the obtaining of an emulsion coating material having superior photocatalytic activity can be realized.

### INDUSTRIAL APPLICABILITY

As has been described above, the present invention relates to a process for production of an emulsion coating material, an emulsion coating material obtained thereby, and films made from the emulsion coating material, and according to the present invention, an emulsion coating material can be provided capable of inhibiting deterioration of coating material components by incorporating in a coating material photocatalyst composite particles obtained by forming, on the surface of titanium oxide, calcium phosphate obtained by precipitating from an aqueous acidic solution having a pH of 4.0 or lower in which is dissolved phosphate ions and calcium ions using a re-precipitation method. In addition, the present invention is able to provide a process for production of an emulsion coating material which, together with enhancing productivity of photocatalyst composite particles by coating calcium phosphate onto the surface of titanium oxide by a simple process, is able to improve the organic substance photodecomposition function and weather resistance of a coating material or film containing the photocatalyst composite particles. The present invention further provides an emulsion coating material obtained by the process of the invention, and a film made from the emulsion coating material. Since a calcium phosphate-supported photocatalyst particle complex can be prepared using a simple procedure and with high productivity, the present invention is useful for providing a novel technology for producing an emulsion coating material, enabling the production of an emulsion coating material incorporating the photocatalyst particle complex with a simple process and high productivity.

## Claims

1. A process for production of an emulsion coating material containing photocatalyst composite particles and a resin component, said process comprising:
preparing an aqueous acidic dispersion/solution having a pH of 4.0 or lower, in which titanium oxide is dispersed and phosphate ions and calcium ions are dissolved, which ions would otherwise precipitate as calcium phosphate if the pH of the dispersion/ solution was greater than 4.0;
then adjusting the pH of the acidic dispersion/solution towards the alkaline side of the pH of the dispersion/solution to obtain photocatalyst composite particles in which said calcium phosphate is precipitated and adhered to the surface of titanium oxide; and
mixing the resultant dispersion of photocatalyst composite particles with the resin component containing an aqueous organic coating material, such as a synthetic resin emulsion, to produce the emulsion coating material,
wherein the particle size distribution of the photocatalyst composite particles as determined by the laser scattering method is controlled to be constant within the range of 80 to 600 nm, the ratio of calcium phosphate in said particles is 0.1 to 50 wt%, and the volume-based mean particle diameter of said particles is within the range of 50 to 1000 nm.

2. The process according to claim 1, wherein the pH of the acidic dispersion/solution is adjusted by using aqueous ammonia.

3. The process according to claim 1, wherein an acidic titania sol is used as the titanium oxide.

4. The process according to claim 1, wherein the pH of the acidic dispersion/solution is adjusted to a pH of 5.0 to 11.0.

5. An emulsion coating material containing photocatalyst composite particles and a resin component,
the photocatalyst composite particles being composed of functional photocatalyst composite particles in which calcium phosphate has been precipitated and adhered to the surface of titanium oxide, wherein the surface of titanium oxide is uniformly coated with the precipitated calcium phosphate,
the particle size distribution of the photocatalyst composite particles as determined by the laser scattering method is constant within the range of 80 to 600nm, the ratio of calcium phosphate in said particles is 0.1 to 50 wt%, the volume-based mean particle diameter of said particles is within the range of 50 to 1000nm, and the amount of said particles in the entire emulsion coating material in terms of the ratio of the solid content of the emulsion coating material is 1 to 20 wt%,
said emulsion coating material having been produced by the process defined in claim 1.

6. A film made from the emulsion coating material according to claim 5, wherein the thickness of the film is 1 to 20 µm.

## Patentansprüche

1. Verfahren zur Herstellung eines Emulsionsbeschichtungsmaterials, enthaltend Photokatalysatorverbundstoffteilchen und eine Harzkomponente, das Verfahren umfassend:
Herstellen einer wässrigen, sauren Dispersion/ Lösung mit einem pH von 4,0 oder niedriger, in der Titanoxid dispergiert ist und Phosphationen und Calciumionen gelöst sind, wobei die Ionen andernfalls als Calciumphosphat präzipitieren würden, wenn der pH von der Dispersion/ Lösung größer als 4,0 wäre;
dann Einstellen des pHs von der sauren Dispersion/Lösung in Richtung des alkalischen Bereichs des pHs von der Dispersion/Lösung, um Photokatalysatorverbundstoffteilchen zu erhalten, in denen das Calciumphosphat präzipitiert ist und an der Oberfläche von Titanoxid anhaftet; und
Mischen der resultierenden Dispersion von Photokatalysatorverbundstoffteilchen mit der Harzkomponente, enthaltend ein wässriges, organisches Beschichtungsmaterial, wie eine synthetische Harzemulsion, um das Emulsionsbeschichtungsmaterial herzustellen,
wobei die Teilchengrößenverteilung von den Photokatalysatorverbundstoffteilchen, wie durch das Laserstreuungsverfahren bestimmt, kontrolliert wird, um konstant in dem Bereich von 80 bis 600 nm zusein, der Anteil von Calciumphosphat in den Teilchen 0,1 bis 50 Gew.-% beträgt, und der volumenbasierte mittlere Teilchendurchmesser von den Teilchen in dem Bereich von 50 bis 1000 nm liegt.

2. Verfahren nach Anspruch 1, wobei der pH von der sauren Dispersion/Lösung unter Verwendung von wässrigem Ammoniak eingestellt wird.

3. Verfahren nach Anspruch 1, wobei ein saures Titandioxidsol als das Titanoxid verwendet wird.

4. Verfahren nach Anspruch 1, wobei der pH von der sauren Dispersion/Lösung auf einen pH von 5,0 bis 11,0 eingestellt wird.

5. Emulsionsbeschichtungsmaterial, enthaltend Photokatalysatorverbundstoffteilchen und eine Harzkomponente,
die Photokatalysatorverbundstoffteilchen zusammengesetzt aus funktionalen Photokatalysatorverbundstoffteilchen, in denen Calciumphosphat präzipitiert worden ist und an der Oberfläche von Titanoxid anhaftet, wobei die Oberfläche von Titanoxid gleichmäßig mit dem präzipitierten Calciumphosphat beschichtet ist,
die Teilchengrößenverteilung von den Photokatalysatorverbundstoffteilchen, wie durch das Laserstreuungsverfahren bestimmt, konstant in dem Bereich von 80 bis 600 nm liegt, der Anteil von Calciumphosphat in den Teilchen 0,1 bis 50 Gew.-% beträgt, der volumenbasierte mittlere Teilchendurchmesser von den Teilchen in dem Bereich von 50 bis 1000 nm liegt, und die Menge der Teilchen in dem gesamten Emulsionsbeschichtungsmaterial hinsichtlich des Anteils von dem Feststoffgehalt des Emulsionsbeschichtungsmaterials 1 bis 20 Gew.-% beträgt,
wobei das Emulsionsbeschichtungsmaterial durch das Verfahren gemäß Anspruch 1 hergestellt worden ist.

6. Film, hergestellt aus dem Emulsionsbeschichtungsmaterial gemäß Anspruch 5, wobei die Dicke des Films 1 bis 20 µm beträgt.

## Revendications

1. Procédé pour la production d'une matière de revêtement en émulsion contenant des particules composites de photocatalyseur et un composant à base de résine, ledit procédé comprenant les étapes consistant à :
préparer une solution/dispersion aqueuse acide ayant un pH de 4,0 ou moins, dans laquelle est dispersé de l'oxyde de titane et sont dissous des ions phosphate et des ions calcium, lesquels ions sinon précipiteraient sous forme de phosphate de calcium si le pH de la solution/dispersion était supérieur à 4,0 ;
puis ajuster le pH de la solution/dispersion acide pour l'amener dans le domaine alcalin du pH de la solution/dispersion afin d'obtenir des particules composites de photocatalyseur dans lesquelles ledit phosphate de calcium est précipité et rendu adhérent à la surface de l'oxyde de titane ; et
mélanger la dispersion résultante de particules composites de photocatalyseur avec le composant à base de résine contenant une substance aqueuse organique de revêtement, telle qu'une émulsion de résine synthétique, pour produire la matière de revêtement en émulsion,
dans lequel la distribution de tailles de particules des particules composites de photocatalyseur, telle que déterminée par la méthode de diffraction laser, est ajustée pour être constante dans la plage de 80 à 600 nm, la proportion de phosphate de calcium dans lesdites particules vaut de 0,1 à 50 % en poids, et le diamètre moyen de particule basé sur le volume desdites particules se situe dans la plage de 50 à 1 000 nm.

2. Procédé selon la revendication 1, dans lequel le pH de la solution/dispersion acide est ajusté à l'aide d'ammoniaque.

3. Procédé selon la revendication 1, dans lequel en tant que l'oxyde de titane on utilise un sol d'oxyde de titane acide.

4. Procédé selon la revendication 1, dans lequel on ajuste le pH de la solution/dispersion acide à un pH de 5,0 à 11,0.

5. Matière de revêtement en émulsion contenant des particules composites de photocatalyseur et un composant à base de résine,
les particules composites de photocatalyseur étant composées de particules composites de photocatalyseur fonctionnel dans lesquelles du phosphate de calcium a été précipité et rendu adhérent à la surface de l'oxyde de titane, la surface de l'oxyde de titane étant uniformément revêtue avec le phosphate de calcium précipité,
la distribution de tailles de particules des particules composites de photocatalyseur, telle que déterminée par la méthode de diffraction laser, étant constante dans la plage de 80 à 600 nm, la proportion de phosphate de calcium dans lesdites particules valant de 0,1 à 50 % en poids, le diamètre moyen de particule basé sur le volume desdites particules étant dans la plage de 50 à 1 000 nm, et la quantité desdites particules dans la totalité de la matière de revêtement en émulsion, exprimée par la proportion de la teneur en matière solide de la matière de revêtement en émulsion, valant de 1 à 20 % en poids,
ladite matière de revêtement en émulsion ayant été produite par le procédé défini dans la revendication 1.

6. Film produit à partir de la matière de revêtement en émulsion selon la revendication 5, l'épaisseur du film valant de 1 à 20 µm.
